# EUROPÄISCHE PATENTANMELDUNG

(11) **EP 3 734 490 A1**
(43) Veröffentlichungstag der Anmeldung: **04.11.2020**
(21) Anmeldenummer: 19172459.0
(22) Anmeldetag: 03.05.2019
(51) Int. Cl.: G06F 30/00

(54) **VERFAHREN ZUR BESTIMMUNG EINES VERBINDUNGSNETZES FÜR EIN ELEKTRISCHES SYSTEM**

(71) Anmelder: Siemens Aktiengesellschaft, 80333 München (DE)
(72) Erfinder: Georgi, Richard, 09120 Chemnitz (DE); Löffler, Mirko, 09112 Chemnitz (DE)

(57) **Zusammenfassung**

Die vorliegende Erfindung betrifft ein von einem Computer ausgeführtes Verfahren zur Bestimmung eines Verbindungsnetzes für ein elektrisches System umfassend die folgenden Schritte: a) Einlesen eines Datensatzes für ein Modell des elektrischen Systems mit Daten für alle elektrisch relevanten Bauteile (9) des elektrischen Systems; b) Bestimmen eines Verbindungspunktes (11, 12) eines elektrisch relevanten Bauteils (9) des elektrischen Systems; c) Ermitteln in welchen Raumrichtungen ausgehend von dem in Verfahrensschritt b) bestimmten Verbindungspunkt (11, 12) sich weitere elektrische Bauteile (13) befinden; d) Bestimmen welches der in Verfahrensschritt c) ermittelten weiteren elektrischen Bauteile (13) im Sinne des zu bestimmenden Verbindungsnetzes ein relevantes Bauteil darstellt; e) Festlegen einer Verbindung zwischen dem in Verfahrensschritt b) ermittelten Verbindungspunkt (11, 12) und dem in Verfahrensschritt d) bestimmten relevanten Bauteil (13) in der korrespondierenden, in Verfahrensschritt c) ermittelten, Raumrichtung; f) Wiederholen der Verfahrensschritte b) bis e) bis ein Verbindungsnetz umfassend die Verbindungspunkte sämtlicher elektrischer Bauteile des elektrischen Systems bestimmt wurde.

## Beschreibung

Die vorliegende Erfindung betrifft ein von einem Computer ausgeführtes Verfahren zur Bestimmung eines Verbindungsnetzes für ein elektrisches System sowie ein entsprechendes Computerprogramm.

Für die Fertigung elektrischer Anlagen und Systeme mit einer Vielzahl von elektrischen Bauteilen ist es notwendig, vorab die Anzahl, die Führungswege, und die Längen der für die Verbindung der einzelnen elektrischen Bauteile notwendigen Kabel, Drähte und dergleichen zu bestimmen. Um der mitunter hohen Komplexität moderner elektrischer Anlagen und Systeme gerecht zu werden, wird diese Vorabbestimmung heutzutage bevorzugt computerunterstützt durchgeführt.

Bisher vorhandene Software hierfür benötigt jedoch eine hohe Anzahl manueller Eingriffe durch einen Benutzer, wodurch häufig ein nachteilig hoher Aufwand entsteht, welcher sich vor allem bei einmalig zu errichtenden Anlagen oder Systemen wirtschaftlich negativ auf die Fertigung der Anlagen oder Systeme niederschlägt. Es wäre daher wünschenswert, den Aufwand für die Bestimmung eines Verbindungsnetzes eines elektrischen Systems zu reduzieren.

Die vorliegende Erfindung löst diese ihr zugrunde liegende Aufgabe mit einem Verfahren mit den Merkmalen des Patentanspruchs 1 sowie mit einem Computerprogramm mit den Merkmalen des Patentanspruchs 15.

Demgemäß ist ein von einem Computer ausgeführtes Verfahren zur Bestimmung eines Verbindungsnetzes für ein elektrisches System vorgesehen. Das Verfahren umfasst die folgenden Schritte:
a) Einlesen eines Datensatzes für ein Modell des elektrischen Systems mit Daten für alle elektrisch relevanten Bauteile des elektrischen Systems;
b) Bestimmen eines Verbindungspunktes eines elektrisch relevanten Bauteils des elektrischen Systems;
c) Ermitteln in welchen Raumrichtungen ausgehend von dem in Verfahrensschritt b) bestimmten Verbindungspunkt sich weitere elektrische Bauteile befinden;
d) Bestimmen welches der in Verfahrensschritt c) ermittelten weiteren elektrischen Bauteile im Sinne des zu bestimmenden Verbindungsnetzes ein relevantes Bauteil darstellt;
e) Festlegen einer Verbindung zwischen dem in Verfahrensschritt b) ermittelten Verbindungspunkt und dem in Verfahrensschritt d) bestimmten relevanten Bauteil in der korrespondierenden, in Verfahrensschritt c) ermittelten, Raumrichtung;
f) Wiederholen der Verfahrensschritte b) bis e) bis ein Verbindungsnetz umfassend die Verbindungspunkte sämtlicher elektrischer Bauteile des elektrischen Systems bestimmt wurde.

Des Weiteren ist ein Computerprogramm vorgesehen, welches Befehle umfasst, die bei der Ausführung des Programms durch einen Computer diesen veranlassen, die Schritte des erfindungsgemäßen Verfahrens auszuführen.

Der vorliegenden Erfindung liegt die Idee zugrunde, über ein Verfahren die automatische Bestimmung eines technisch sinnvollen Verbindungsnetzes zu gewährleisten, ohne dass hierfür ein manueller Eingriff eines Benutzers notwendig ist. Dies ermöglicht die Montage elektrischer Systeme mit minimalem persönlichem Aufwand bei der Planung und eine damit einhergehende Produktivitätssteigerung. Diese Automatisierung ist bei dem vorliegenden Verfahren unabhängig von der Anordnung der einzelnen elektrischen Bauteile im Raum möglich und eröffnet mehr Gestaltungsfreiraum bei dem Design elektrischer Systeme.

Weitere Vorteile und bevorzugte Ausführungsformen ergeben sich aus den Unteransprüchen.

Gemäß einer Ausführungsform des Verfahrens liegt der in Verfahrensschritt a) eingelesene Datensatz in Textform, insbesondere in einer Auszeichnungssprache, vor. Besonders bevorzugt handelt es sich bei der Auszeichnungssprache um XML. Daten in Textform benötigen nur wenig Speicherplatz und vereinfachen das Übertragen der Daten an den das Verfahren ausführenden Computer. Das Verwenden einer Auszeichnungssprache erlaubt den Zugriff von anderer Software, etwa von Web-Browsern, auf den Datensatz für eine plattformunabhängige Darstellung und Visualisierung des Datensatzes für einen Benutzer.

Gemäß einer Ausführungsform des Verfahrens werden in Verfahrensschritt e), falls es sich bei dem in Verfahrensschritt d) ermittelten relevanten Bauteil um ein Bauteil zur Drahtführung handelt, die Verfahrensschritte b) bis d) für die Verbindungspunkte des in Verfahrensschritt d) ermittelten relevanten Bauteils wiederholt, bis eine Verbindung zu einem relevanten Bauteil, bei welchem es sich nicht um ein Bauteil zur Drahtführung handelt, festgelegt wurde. Dies erlaubt die Verwendung des entsprechenden Verfahrens für elektrische Systeme, in welchen die Verbindungen zwischen elektrischen Bauteilen primär durch für Drahtführung vorgesehene Bauteile, wie etwa Kabelkanäle oder dergleichen, erfolgen soll, verwendet werden.

Gemäß einer Ausführungsform des Verfahrens werden, falls in Verfahrensschritt d) mehrere relevante elektrische Bauteile bestimmt werden, sämtliche Verfahrensschritte so oft wiederholt, bis sämtliche technisch sinnvollen Verbindungsnetze bestimmt wurden. Hierdurch wird eine Vielzahl an theoretisch möglichen, technisch sinnvollen Verbindungsnetzen bestimmt. Einem Benutzer ergibt sich somit eine vorteilhafte Auswahlmöglichkeit, welches Verbindungsnetz realisiert werden soll.

Gemäß einer Ausführungsform des Verfahrens sind die elektrischen Bauteile in dem Modell des elektrischen Systems jeweils einer Bezugsfläche zugeordnet und die Verfahrensschritte b) bis e) werden bezogen auf die entsprechende Bezugsfläche ausgeführt. Eine derartige Aufteilung des elektrischen Systems erlaubt eine vorteilhaft effiziente Durchführung des Verfahrens.

Gemäß einer Weiterbildung des Verfahrens werden in Verfahrensschritt f) zusätzlich Verbindungen zwischen einzelnen Bezugsflächen des Modells des elektrischen Systems ermittelt. Hierdurch wird eine vorteilhaft effiziente Linienführung in dem zu bestimmenden Verbindungsnetz ermöglicht.

Gemäß einer Ausführungsform des Verfahrens wird in Verfahrensschritt c) zunächst in einer geraden Linie, ausgehend von dem in Verfahrensschritt b) bestimmten Verbindungspunkt nach weiteren elektrischen Bauteilen gesucht. Bevorzugt wird, falls die Suche in der geraden Linie kein weiteres elektrisches Bauteil findet, in einer entgegengesetzten Richtung nach weiteren elektrischen Bauteilen gesucht. Besonders bevorzugt wird, falls die Suche in der entgegengesetzten Richtung kein weiteres elektrisches Bauteil findet, aufeinanderfolgend in weiteren Richtungen orthogonal zu der geraden Linie und der entgegengesetzten Richtung nach weiteren elektrischen Bauteilen gesucht. Hierdurch wird auf eine vorteilhaft effiziente Weise ein Verbindungsnetz mit möglichst kurzen Verbindungswegen bestimmt.

Gemäß einer Ausführungsform umfasst das Verfahren weiterhin den folgenden Verfahrensschritt:
g) Bestimmen der Länge sämtlicher Verbindungen des in Verfahrensschritt f) bestimmten Verbindungsnetzes.

Dies erlaubt vorteilhafter Weise zusätzlich zur Bestimmung des Verbindungsnetzes an sich die Bestimmung der Längen der zu verwendenden Kabel oder Drähte. Die Fertigung des elektrischen Systems kann damit vorteilhaft effizient eingeleitet werden.

Gemäß einer Weiterbildung des Verfahrens werden in Verfahrensschritt g) Biegeradien der Verbindungen einbezogen. Dies erhöht die Genauigkeit der bestimmten Längen der Verbindungen auf vorteilhafte Weise.

Gemäß einer Ausführungsform des Verfahrens kann ein Benutzer in einem weiteren Verfahrensschritt weitere Besonderheiten des elektrischen Systems festlegen und/oder verändern kann. Bevorzugt wird der weitere Verfahrensschritt nach Verfahrensschritt a) durchgeführt. Ebenso bevorzugt wird der weitere Verfahrensschritt nach Verfahrensschritt f) oder nach Verfahrensschritt g) durchgeführt, woraufhin sämtliche Verfahrensschritte erneut durchgeführt werden. Zusätzlich zur automatischen Bestimmung des Verbindungsnetzes wird einem Benutzer vorteilhaft ermöglicht, auf das Ergebnis der Bestimmung zumindest indirekt Einfluss zu nehmen. Die Einflussnahme zu Beginn des Verfahrens schränkt die Freiheitsgrade der weiteren Verfahrensschritte ein und erhöht damit vorteilhaft die Effizienz des Verfahrens. Wird zunächst das Verfahren durchgeführt, so ist es dem Benutzer vorteilhaft möglich, zunächst zu betrachten, welches Verbindungsnetz durch das Verfahren bestimmt wird und danach manuell Veränderungen herbeizuführen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: ein Ablaufdiagramm einer Ausführungsform des erfindungsgemäßen Verfahrens;
- Fig. 2: ein Ablaufdiagramm einer weiteren Ausführungsform des erfindungsgemäßen Verfahrens;
- Fig. 3: ein Ablaufdiagramm einer weiteren Ausführungsform des erfindungsgemäßen Verfahrens;
- Fig. 4: ein Beispiel für einen Anwendungsfall eines Verfahrensschritts einer Ausführungsform eines erfindungsgemäßen Verfahrens;
- Fig. 5: ein Beispiel für einen weiteren Anwendungsfall eines Verfahrensschritts einer Ausführungsform eines erfindungsgemäßen Verfahrens.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

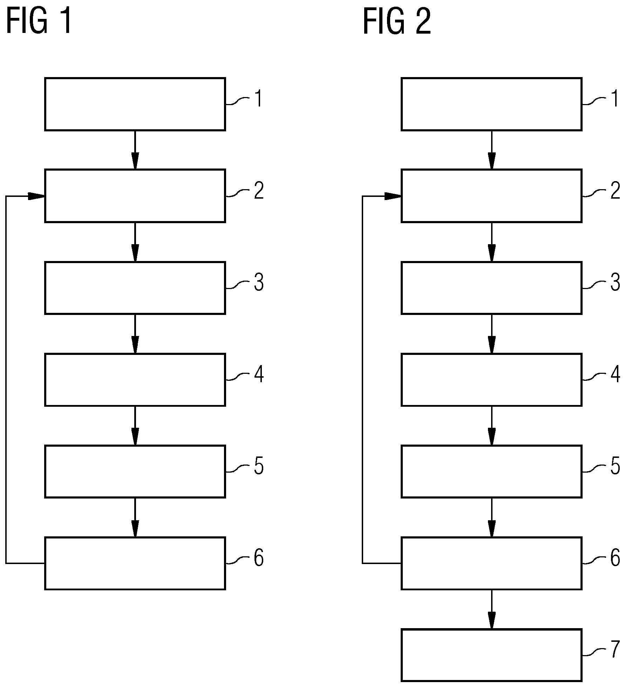

Fig. 1 zeigt ein schematisches Ablaufdiagramm für ein Ausführungsbeispiel eines erfindungsgemäßen Verfahrens. In einem Verfahrensschritt 1 wird ein Datensatz für ein Modell eines elektrischen Systems mit Daten für alle elektrisch relevanten Bauteile des elektrischen Systems eingelesen. In einem weiteren Verfahrensschritt 2 wird ein Verbindungspunkt eines elektrisch relevanten Bauteils des elektrischen Systems bestimmt. In einem weiteren Verfahrensschritt 3 wird ermittelt, in welchen Raumrichtungen ausgehend von dem in Verfahrensschritt 2 bestimmten Verbindungspunkt sich weitere elektrische Bauteile befinden. In einem weiteren Verfahrensschritt 4 wird bestimmt, welches der in Verfahrensschritt 3 ermittelten weiteren elektrischen Bauteile im Sinne des zu bestimmenden Verbindungsnetzes ein relevantes Bauteil darstellt. In einem weiteren Verfahrensschritt 5 wird eine Verbindung zwischen dem in Verfahrens-schritt 2 ermittelten Verbindungspunkt und dem in Verfahrensschritt 4 bestimmten relevanten Bauteil in der korrespondierenden, in Verfahrensschritt 3 ermittelten, Raumrichtung, festgelegt. In einem weiteren Verfahrensschritt 6 werden die Verfahrensschritte 2 bis 5 wiederholt, bis ein Verbindungsnetz umfassend die Verbindungspunkte sämtlicher elektrischer Bauteile des elektrischen Systems bestimmt wurde.

Der in Verfahrensschritt 1 eingelesene Datensatz stellt ein intelligentes 3D-Modell der elektrischen Anlage dar. Dieses Modell beinhaltet alle elektrisch relevanten Bauteile. Die Bauteile sind vorteilhafterweise von der Datenstruktur her so intelligent, dass aus den vorhandenen Daten erkennbar ist, um welche Klasse von Bauteil es sich handelt. Diese Klassen von Baueteilen können für die Verwendung im Maschinen- und Anlagenbau beispielsweise "Kabelkanal", "Hutschiene", "Betriebsmittel" oder "Montageplatte" und weitere umfassen. Das Verfahren kann vorteilhafterweise auch Verbindungsinformationen in Form von Quelle, Ziel, Farbe und Querschnitt einer Verbindung einlesen. Diese Verbindungsdaten können direkt Teil des Datensatzes für das 3D-Modell der Anlage sein, können aber auch in Listenform als separater Datensatz vorhanden sein.

Der Datensatz kann hierbei in einem eigens erstellten Datenformat, etwa auf Basis der "Extendable Markup Language" (XML), welches zu WKC-XML erweitert wurde, vorliegen. Hierfür kann vorgesehen sein, dass alle Daten aus verschiedenen Quellen zu einer eigens erstellten XML-Struktur kombiniert werden. Diese Struktur umfasst alle Inhalte des intelligenten 3D-Modells und ist der in Standard-Strukturen aufgelöste digitale Zwilling des Erzeugnisses. Vorteil dieses Datenmodells ist eine herstellerunabhängige Verwendung der Daten, inklusive 3D-Modell.

Alle Daten des eingelesenen Datensatzes (Artikel-, Modell- und Funktionsdaten) können in einer einzigen Datei basierend auf einer XML-Struktur gespeichert und übertragen werden. Da es sich nur um Text-Informationen handelt, die in einer beliebigen 3D-Software wieder zu einem intelligenten Modell zusammengesetzt werden können, ergibt sich ein stark verringerter Speicherplatz, damit eine hohe Möglichkeit des Datenaustauschs und die Möglichkeit zur Anzeige der Daten, Modelle und Funktionen in plattformunabhängigen Web-Browsern.

Fig. 2 zeigt ein schematisches Ablaufdiagramm für ein weiteres Ausführungsbeispiel eines erfindungsgemäßen Verfahrens. Das in Fig. 2 ausgeführte Verfahren weist im Wesentlichen dieselben Verfahrensschritte wie das in Fig. 1 gezeigte Verfahren auf. Zusätzlich wird in einem weiteren Verfahrensschritt 7 die Länge sämtlicher Verbindungen des in Verfahrensschritt 6 bestimmten Verbindungsnetzes bestimmt.

Hierbei kann ein 3D-Verrundungs-Algorithmus angewendet werden, der unter den Rahmenbedingungen des Querschnitts und der Manteldicke einen optimalen Radius pro Verbindung berechnet. Die Ergebnisse werden auf die Länge der betroffenen Verbindung angewendet.

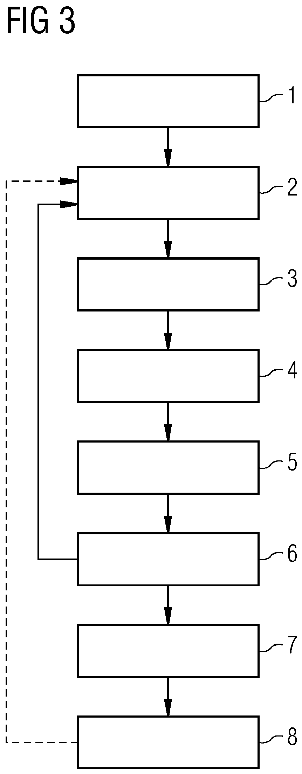

Fig. 3 zeigt ein schematisches Ablaufdiagramm für ein weiteres Ausführungsbeispiel eines erfindungsgemäßen Verfahrens.

Das in Fig. 3 gezeigte Verfahren weist im Wesentlichen dieselben Verfahrensschritte wie das in Fig. 2 gezeigte Verfahren auf. In einem weiteren Verfahrensschritt 8 kann ein Benutzer weitere Besonderheiten des elektrischen Systems festlegen und/oder verändern. Falls ein Benutzer dies tut, werden die Verfahrensschritte 2 bis 7 wiederholt.

Durch Nutzerinteraktion können somit anwendungsspezifische Besonderheiten der Anlage berücksichtigt werden. Der Nutzer kann pro zur Drahtführung geeignetem Element beispielsweise folgende Bedingungen festlegen. Es können etwa für bestimmte Verbindungen nur bestimmte Drahtfarben und/oder Drahtquerschnitte zugelassen sein. Elemente, die prinzipiell zur Drahtführung geeignet sind, können für einen spezifischen Anwendungsfall von der Drahtführung ausgeschlossen werden. Bestimmte Segmente können mit einem abweichenden Füllgrad versehen werden.

Durch eine Nutzerinteraktion können nun einzelne Verbindungen fertigungstechnologisch angepasst werden. Dazu können dem Nutzer innerhalb einer grafischen Benutzeroberfläche (Graphical User Interface: GUI) einfache und verständliche Möglichkeiten gegeben werden, anlagen- oder auftragsspezifische Besonderheiten einzelner Verbindungen anzupassen. Außerdem kann die Möglichkeit bestehen über eine zu Grunde liegende Verbindungsliste die Verbindungspunkte der elektrischen Bauteile zu beeinflussen und so fertigungstechnologische Anpassungen vorzunehmen.

Durch die beschriebenen Möglichkeiten kann der Nutzer entscheiden, welcher Verbindungspunkt für eine Verbindung gewählt wird, unabhängig von der physischen Position des Anschlusses. So ist es u.a. möglich Verbindungen, die aus einem Gerät nach oben abgehen, trotzdem nach unten zu routen.

Jede Modifikation verursacht eine neue Längenberechnung unter Einhaltung der Regeln pro Segment in Echtzeit. Das Ergebnis ist die kürzeste, regelkonforme und damit optimale elektrische Verbindung.

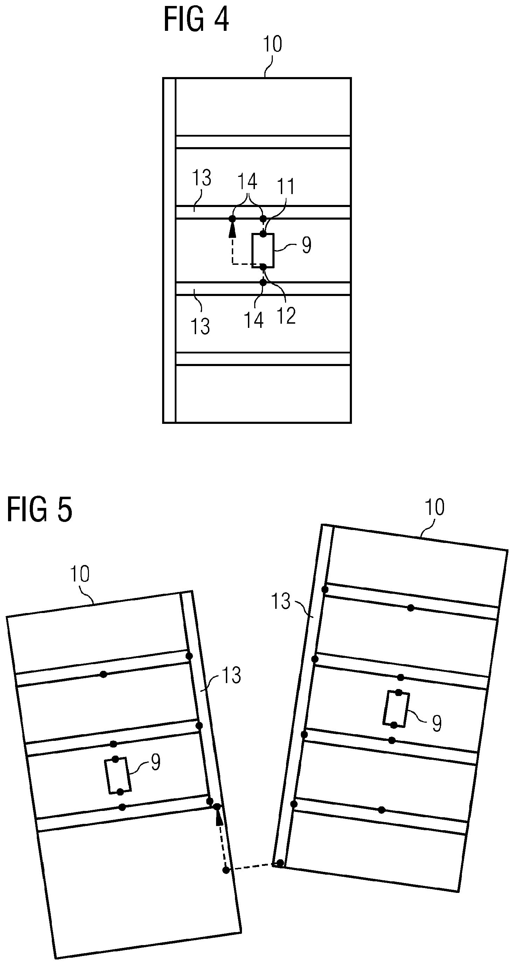

Fig. 4 zeigt ein Beispiel für einen Anwendungsfall eines Verfahrensschritts einer Ausführungsform eines erfindungsgemäßen Verfahrens. Gezeigt ist ein elektrisches Bauteil 9, welches fest mit einer Bezugsfläche 10, im gezeigten Beispiel mit einer Montageplatte eines Schaltschrankes, verbunden ist. Das Modell kann das elektrische Bauteil 9 als Object Oriented Bounding Box darstellen. In diesem Fall benötigt das Modell nur die Parameter bezüglich Position und Ausdehnung des Bauteils 9, welche aus dem eingelesenen Datensatz erkennbar bzw. berechenbar sind. Pro Gerät werden automatisch Verbindungspunkte, in diesem Fall ein TOP-Connector 11 und ein BOTTOM-Connector 12, ermittelt.

Ausgehend von diesem Bauteil 9 wird im Koordinatensystem der Bezugsfläche nach weiteren Bauteilen gesucht. Es wird in diesem Schritt also mit der Projektion eines 3D-Modells auf eine 2D-Fläche gearbeitet. c) Werden weitere Bauteile gefunden, wird an Hand der Klasse des Bauteils entschieden, ob es sich im Sinne des Streckennetzes um ein relevantes Bauteil handelt oder nicht.

Im hier gezeigten Anwendungsfall wird aus der Menge der Treffer das Element ermittelt, welches ausgehend vom TOP-Connector und ausgehend vom BOTTOM-Connector der kürzeste Weg in ein Element der Klasse "Kabelkanal" 13 bzw. ein für die Drahtführung erlaubtes Element ist. Die Verbindungspunkte von für die Drahtführung erlaubten Elementen werden hier als "Knoten" 14 bezeichnet. Die Verbindungen zwischen den Verbindungspunkten 11, 12 des elektrischen Bauteils 9 und den Knoten 14 werden in Fig. 4 durch gestrichelte Linien angedeutet.

Für den Fall, dass in den Abgangsrichtungen der Connectoren kein als Eintrittspunkt relevantes Bauteil gefunden werden würde, würde automatisch in entgegengesetzter Richtung gesucht und ein Eintrittspunkt definiert, was in Fig. 4 durch einen gestrichelten Pfeil angedeutet wird.

Für den Fall, dass auch die Suche in entgegengesetzter Richtung erfolglos sein würde, so würde nach links oder rechts ausgehend von der Komponente gesucht. Bei anhaltendem Misserfolg würde schlussendlich die kürzeste direkte Verbindung zum nächsten Einsprungpunkt ermittelt und festgelegt. Es wird auf jeden Fall immer für jeden Verbindungspunkt ein möglicher Eintrittspunkt gefunden, es erfolgt kein Abbruch und keine Fehlermeldung.

Für den Fall, dass in dem eingelesenen Datensatz kein Anschlussbild der Komponenten hinterlegt sein sollte, d.h. falls nicht bekannt sein sollte, welche Verbindungspunkte an welcher Position das Bauteil 9 hat, können beispielsweise folgende Annahmen getroffen werden: Ungerade bezeichnete Klemmenstellen (1, 3, 5, ...) werden automatisch oben am Gerät mit Abgangsrichtung nach oben angenommen. Gerade bezeichnete Klemmenstellen (2, 4, 6, ...) werden automatisch unten am Gerät mit Abgangsrichtung unten angenommen. Pro Verbindung wird damit mit hoher Wahrscheinlichkeit der korrekte Verbindungspunkt an dem Bauteil ausgewählt. Dieser kann später in einer Nutzerinteraktion geändert werden. Wird ein Anschlussbild in dem eingelesenen Datensatz gefunden, werden die bekannten Verbindungspunkte mit dem Anschlussbild synchronisiert und automatisch die korrekte Abgangsrichtung und somit der richtige Verbindungspunkt ermittelt.

Fig. 5 zeigt ein Beispiel für einen weiteren Anwendungsfall eines Verfahrensschritts einer Ausführungsform eines erfindungsgemäßen Verfahrens.

Ausgangspunkt ist nun die gesamte Bezugsfläche 10, welche die elektrischen und die für die Drahtführung geeigneten Elemente 9, 13 enthält. Durch den Bezug zu einem globalen Koordinatensystem wird die kürzeste Verbindung zwischen den möglicherweise windschiefen Ebenen ermittelt. Diese Verbindung wird in Fig. 5 durch eine gestrichelte Linie angedeutet.
Ausgehend von der kürzesten Verbindung wird nun pro Fläche in allen Richtungen nach dem am nächsten liegenden Einsprungpunkt in das vorhandene Netz zur Drahtführung gesucht. Diese Verbindung wird in Fig. 5 durch einen gestrichelten Pfeil angedeutet. Ohne Nutzerinteraktion ist so die Längenbestimmung von Verbindungen zwischen den Ebenen möglich. Sollten durch eine Parallelität der Flächen zueinander mehrere Verbindungen zwischen den Flächen mit der gleichen Länge entstehen, wird dem Nutzer ein anpassbarer Vorschlag unterbreitet.

## Patentansprüche

1. Computer-implementiertes Verfahren zur Bestimmung eines Verbindungsnetzes für ein elektrisches System umfassend die folgenden Schritte:
a) Einlesen (1) eines Datensatzes für ein Modell des elektrischen Systems mit Daten für alle elektrisch relevanten Bauteile (9) des elektrischen Systems;
b) Bestimmen (2) eines Verbindungspunktes (11, 12) eines elektrisch relevanten Bauteils (9) des elektrischen Systems;
c) Ermitteln (3) in welchen Raumrichtungen ausgehend von dem in Verfahrensschritt b) bestimmten Verbindungspunkt (11, 12) sich weitere elektrische Bauteile (13) befinden;
d) Bestimmen (4) welches der in Verfahrensschritt c) ermittelten weiteren elektrischen Bauteile (13) im Sinne des zu bestimmenden Verbindungsnetzes ein relevantes Bauteil darstellt;
e) Festlegen (5) einer Verbindung zwischen dem in Verfahrensschritt b) ermittelten Verbindungspunkt (11, 12) und dem in Verfahrensschritt d) bestimmten relevanten Bauteil (13) in der korrespondierenden, in Verfahrensschritt c) ermittelten, Raumrichtung;
f) Wiederholen (6) der Verfahrensschritte b) bis e) bis ein Verbindungsnetz umfassend die Verbindungspunkte sämtlicher elektrischer Bauteile des elektrischen Systems bestimmt wurde.

2. Verfahren nach Anspruch 1,
wobei der in Verfahrensschritt a) eingelesene Datensatz in Textform, insbesondere in einer Auszeichnungssprache, vorliegt.

3. Verfahren nach Anspruch 1 oder Anspruch 2,
wobei in Verfahrensschritt e), falls es sich bei dem in Verfahrensschritt d) ermittelten relevanten Bauteil (13) um ein Bauteil zur Drahtführung handelt, die Verfahrensschritte b) bis d) für die Verbindungspunkte des in Verfahrensschritt d) ermittelten relevanten Bauteils wiederholt werden, bis eine Verbindung zu einem relevanten Bauteil, bei welchem es sich nicht um ein Bauteil zur Drahtführung handelt, festgelegt wurde.

4. Verfahren nach einem der vorhergehenden Ansprüche,
wobei, falls in Verfahrensschritt d) mehrere relevante elektrische Bauteile (13) bestimmt werden, sämtliche Verfahrensschritte so oft wiederholt werden, bis sämtliche technisch sinnvollen Verbindungsnetze bestimmt wurden.

5. Verfahren nach einem der vorhergehenden Ansprüche,
wobei die elektrischen Bauteile (9) in dem Modell des elektrischen Systems jeweils einer Bezugsfläche (10) zugeordnet sind und die Verfahrensschritte b) bis e) bezogen auf die entsprechende Bezugsfläche (10) ausgeführt werden.

6. Verfahren nach Anspruch 5,
wobei in Verfahrensschritt f) zusätzlich Verbindungen zwischen einzelnen Bezugsflächen (10) des Modells des elektrischen Systems ermittelt werden.

7. Verfahren nach einem der vorhergehenden Ansprüche,
wobei in Verfahrensschritt c) zunächst in einer geraden Linie, ausgehend von dem in Verfahrensschritt b) bestimmten Verbindungspunkt (11, 12) nach weiteren elektrischen Bauteilen gesucht wird.

8. Verfahren nach Anspruch 7,
wobei, falls die Suche in der geraden Linie kein weiteres elektrisches Bauteil findet, in einer entgegengesetzten Richtung nach weiteren elektrischen Bauteilen gesucht wird.

9. Verfahren nach Anspruch 8,
wobei, falls die Suche in der entgegengesetzten Richtung kein weiteres elektrisches Bauteil findet, aufeinanderfolgend in weiteren Richtungen orthogonal zu der geraden Linie und der entgegengesetzten Richtung nach weiteren elektrischen Bauteilen gesucht wird.

10. Verfahren nach einem der vorhergehenden, weiterhin umfassend den folgenden Verfahrensschritt:
g) Bestimmen (7) der Länge sämtlicher Verbindungen des in Verfahrensschritt f) bestimmten Verbindungsnetzes.

11. Verfahren nach Anspruch 10,
wobei in Verfahrensschritt g) Biegeradien der Verbindungen einbezogen werden.

12. Verfahren nach einem der vorhergehenden Ansprüche,
wobei in einem weiteren Verfahrensschritt (8) ein Benutzer weitere Besonderheiten des elektrischen Systems festlegen und/oder verändern kann.

13. Verfahren nach Anspruch 12,
wobei der weitere Verfahrensschritt (8) nach Verfahrensschritt a) durchgeführt wird.

14. Verfahren nach Anspruch 12 oder Anspruch 13,
wobei der weitere Verfahrensschritt (8) nach Verfahrensschritt f) oder nach Verfahrensschritt g) durchgeführt wird, woraufhin sämtliche Verfahrensschritte erneut durchgeführt werden.

15. Computerprogramm, umfassend Befehle, die bei der Ausführung des Programms durch einen Computer diesen veranlassen, die Schritte des Verfahrens nach einem der Ansprüche 1 bis 14 auszuführen.
